# EUROPEAN PATENT APPLICATION

(11) **EP 2 236 042 A1**
(43) Date of publication of application: **06.10.2010**
(21) Application number: 09156697.6
(22) Date of filing: 30.03.2009
(51) Int. Cl.: A23L 1/00, A23L 1/015, A23L 2/06, A23L 2/84

(54) **Fresh citrus juice and a method for preparing the same**

(71) Applicant: Nestec S.A., 1800 Vevey (CH)
(72) Inventor: Laux, Roland, 9325, Roggwil-TG (CH); Hühn, Tilo, 8824, Schönenberg-ZH (CH)
(74) Representative: Chautard, Cécile

(57) **Abstract**

The present invention relates to fresh citrus juices and a method for the preparation thereof. The method comprises a process for peeling fresh citrus fruit followed by a pressing stage to release the fruit juice wherein this stage is performed under such conditions that the resulting fruit juice is fresh. The present invention also relates to fresh fruit juices.

## Description

The present invention relates to fresh citrus juices and a method for the preparation thereof. The method comprises a process for peeling fresh citrus fruit followed by a pressing stage to release the fruit juice wherein this stage is performed under such conditions that the resulting fruit juice is fresh. The present invention also relates to fresh fruit juices.

### Background of the invention

Fresh cut citrus fruit products have gained more and more interest over the past years. These products are sold in the convenience food, health and wellness markets. Large scale production of citrus fruit segments requires methods for mechanical peeling of citrus fruit. Such methods and equipment for processing and slicing of citrus fruits have been extensively described. Whereas manual equipment for peeling citrus fruit has been described in for example US patents 3,721,573 ("Peeling citrus fruit"); 3,753,397 ("Apparatus for sectionizing citrus fruit") and 4,010,541 ("Citrus fruit peeling implement"), more patents disclose machines for processing citrus fruit to slices. Examples of the latter can be found in US patents 4,129,068 ("Citrus slicing apparatus"); 4,318,339 ("Apparatus for cold peeling of citrus fruit"); 4,394,393 ("Method for peeling citrus fruit") and 4,729,299 ("Citrus fruit peeling machines").

Citrus fruit consists of the following parts:
- Peel which consists of the epidermis (wax layer; cutin, primary cell wall and epidermal cells) and the flavedo (cells interspersed with oil glands);
- Albedo of a sponge-like cell structure. The thickness of this layer depends on the type of fruit and typically ranges from 0.15 cm for oranges to 1.5 cm for certain grapefruits. The albedo mostly consists of pectin and some (hemi-)cellulosic material;
- Core containing vascular bundles in a sponge-like cell structure made up from pectin;
- Segments mostly about 10 per fruit consisting of a wall and juicy vesicles. The wall is made up of pectin. This wall encloses juice sacs or vesicles containing the juice and these vesicles are again composed of pectin.

Mechanical peeling disrupts part of the cells and cell wall structure thereby releasing fruit juice which contains part of the substances of the oil glands, hesperidine and other often bitter tasting and unwanted ingredients. The segmented products still containing parts of the albedo which also negatively impacts the taste. At the same time the release of the juice starts the oxidation which normally occurs under atmospheric conditions, which also profoundly affects the taste.

With a view to diminishing the amount of albedo and other parts of the peel on the citrus fruit segments a new way of preparing citrus fruit segments was developed. This technique is used on an ever increasing scale. The basis for this technique is that the albedo layer is enzymatically dissolved. This results in the possibility of easy removal of the peel which is no longer attached to the fruit segments. The clean fruit segments have an improved taste and a better appearance.

Enzyme infusion was first described in a patent of the US Department of Agriculture (US 4,284,651 "Method of preparing citrus fruit sections with fresh fruit flavor and appearance"). The patent describes how thick albedo type citrus fruit sections with fresh fruit flavour and appearance are prepared by;
- first washing the fruit;
- heating the fruit to a core temperature of between about 20 °C and 40°C;
- scoring the peel surface of the fruit so as to barely penetrate the albedo or white layer, but not to penetrate the juicy sections;
- vacuum infusing the air bubbles of the thick albedo of the fruit with an aqueous solution of pectinases;
- incubating the fruit for a sufficient time;
- removing the peel and other membrane of the fruit;
- separating each juice section intact from the segment membranes and
- storing under refrigeration.

Variants of the indicated process have been described and relate to pre-treatment at lower temperature of about 10°C (US 5,200,217), pressure infusion of the enzyme solution (US 5, 000,967) and the use of improved mixtures of enzymes (Tal S. and C.H. Mannheim, Lebensm.-Wiss. u. Techn. 27 245-248 (1994)).

All the references mentioned so far stop at the stage where the whole peeled fruit or fruit segment has been obtained. No further treatment to the different citrus juices has been described.

Fresh citrus fruit juices are normally prepared either by cutting the fruit in two parts and then uses a reamer to ream out the inside of the fruit or by the use of two cups. At this the fruit is squeezed down into the lower cup while a sharp edge cuts a 1"-diameter hole into the bottom of the fruit. The inside portion is forced down into a perforated pipe where the juice will be extracted. Methods for performing this process in an automated manner have been developed. An example of such a process has been described in various publications (e.g. Kimball D.A., Citrus Processing, Aspen Publishers (1999)).

In general there are two major problems with the methods described thus far.The first being that there is always contamination of the juice with ingredients coming from the skin which gives a characteristic bitter flavour to the product. A further problem is the fact that the treatment takes a relatively long time taking into account that due to oxidation phenomena the taste of the juice deteriorates to an unacceptable level in about 10 minutes.

There is thus a need for improvement of the process to avoid the mentioned drawbacks. The present invention meets such a need.

### Summary of the invention

The present invention relates to stable citrus fruit juice **characterised in that** they contain at least 400 µg/l of esters. It also relates to fresh citrus fruit juices. The fresh juices are **characterised in that** they contain at least 400 µg/l of esters, preferably between 400 and 800 µg/l.

Also, the juices according to the present invention contain between 50 and 2000 µg/l of terpenes.

The juices are prepared from citrus fruit preferably oranges, mandarins, grapefruits, lemons, limes, tangerins, and mandarins and/or similar fruits such as kumquats (*fortunella*), Chinese bitter oranges (*poncirus*).

The present invention also relates to a method for the preparation of fresh citrus juices. The method for producing fresh citrus juice of the present invention comprises at least the following steps:
- scoring the peel surface of the fruit so as to barely penetrate the albedo or white layer, but not to penetrate the juicy sections,
- immersing of the treated fruits in an enzymatic solution for a sufficient time to allow the albedo to be enzymatically degraded,
- peeling the skin of the treated citrus fruit without releasing the juice,
- releasing the citrus fruit juice under such conditions that it is freshly packaged.

The present invention further relates to the packaging of the subject fruit juices and the storage thereof.

The present invention also relates to the use of the fresh citrus juices in the preparation of drinks (including sports drinks, health drinks, cereal-based drinks or dairy-based drinks such as smoothies), desserts, breakfast solutions, confectionery products or infant products, for example. It can also be used in combination with vegetable juices.

The citrus fruit juices according to the present invention have numerous advantages over commercially available fruit juices, on the one hand they contain less of the undesirable ingredient and on the other hand they present an improved stability. In fact, it has been found that the extraction process according to the invention allows to extract in a continuous and faster way more fruit esters - which in a normal process time would be partly destroyed - and have a faster enzyme inactivation, therefore higher levels of esters are reached in the stabilized storable juice.
Then, the product is not only stable when stored packaged but also before packaging and after opening of the package the product is markedly more stable than fresh pressed product or product contained from packages.

### Brief description of the figures

Figure 1 shows a schematic representation of a process for obtaining fresh orange juice according to the present invention.
Figure 2-6 show results of the analysis of orange juice for esters (figure 2), terpenes (figure 3), limonene (figure 4), aldehyde (figure 5) and valencene (figure 6). A comparison is also made with fresh hand pressed orange juice and commercially available packaged juices both so-called "pure and undiluted" and juice on the basis of concentrate.
Figure 7 shows results of the analysis of peel oil in orange juices.

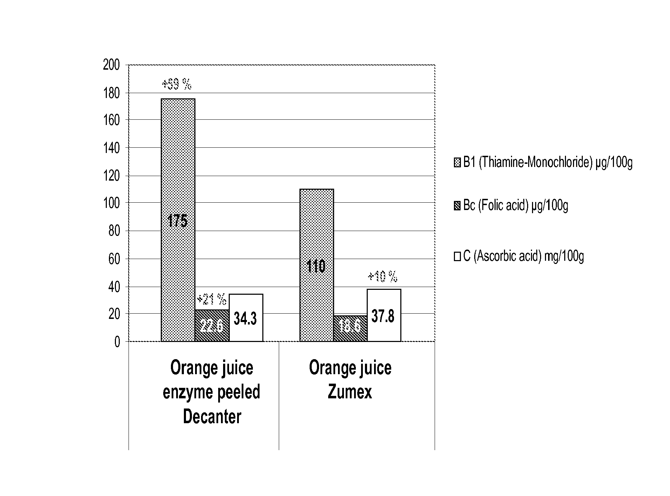

Figure 8 shows the vitamin concentration after pasteurization in orange juice prepared according to the present invention and fresh-pressed orange juice.

### Description of the invention

The present invention relates to fresh citrus fruit juices. Current products on the market are mostly made from concentrated citrus fruit juices.

As far as citrus fruit juices are sold as fresh products they are generally produced just before drinking by fresh pressing. As indicated above such a process wherein the fruits are halved and the two parts are separately pressed manually either mechanically or on an electrically driven rotor give rise to a product which contains albedo or ingredients thereof and/or parts of the peel. This negatively influences the taste. In unusual cases when care is taken the product may not contain these undesired ingredients but in these cases this will go at the cost of a substantial part of the yield.

Citrus juice in the present context means juice obtained from citrus fruits i.e. grapefruits, oranges, lemons, limes, tangerins, and/or mandarins and/or similar fruits such as kumquats (*fortunella*), Chinese bitter oranges (*poncirus*), for example. Also covered are mixtures of these fruit juices which have been obtained by processing mixtures of the fruits or which have been mixed after preparation. Preferred citrus juices are orange juices.

The orange juice according to the present invention is **characterised in that** it contains at least 800 µg/l of esters, preferably between 400 and 800 µg/l of esters (measured in the form of methyl- plus ethyl butanoate), more preferably at least 500 µg/l, even more preferably between 500 and 700 µg/l of esters.

The orange juice is further **characterised in that** the level of terpenes (linalool, α - terpineol, geraniol, terpinen-4-ol, 4-vinylguaiacol, carvone, α -pinene, β-myrcene, α-terpinene) is between 50 and 2000 µg/l. Preferably the between 100 and 1900 µg/l, more preferably between 200 and 1800 µg/l, even more preferably between 200 and 1500 µg/l and most preferably between 200 and 400 µg/l.

The orange juice is further **characterised in that** the level of limonene is between 50 and 70 mg/l.
The orange juice is further **characterised in that** the level of aldehyde is between 40 and 90 µg/l, more preferably between 40 and 70 µg/l and even more preferably between 50 and 70 µg/l.

The orange juice is further **characterised in that** it contains less valencene than retail products. In a preferred embodiment, it contains less than 2 mg/l of valencene preferably less than 1.7 and more preferably between 1 and 2 mg/l, even more preferably between 1.3 and 1.7 mg/l.

The present invention does not only give rise to juices containing less of the undesirable ingredient as specified above it also contains less of the peel oil which normally comes out of the peels when pressing is too long. Specifically, the amount of peel oil in orange juice prepared according to the present invention is below 0.016 %v/v, preferably below 0.015 %v/v, more preferably below 0.014 %v/v, even more preferably below 0.012 % v/v.

The citrus fruit juice can further be characterized by the storability. The product of the present invention is stable during prolonged storage. They can be stored for 1 month, 2 months or up to 6 month, without deterioration of the taste, for example.

The product is not only stable when stored packaged but also before packaging and after opening of the package the product is markedly more stable then fresh pressed product or product contained from packages.

The present invention also relates to a method for preparing fresh citrus fruit juices which method comprises the steps of:
a) scoring the peel surface of the fruit so as to barely penetrate the albedo or white layer, but not to penetrate the juicy sections,
b) immersing of the treated fruits in an enzymatic solution for a sufficient time to allow the albedo to be enzymatically degraded,
c) peeling the skin of the treated citrus fruit without releasing the juice,
d) releasing the citrus fruit juice under such conditions that it is freshly packaged.

In the first step of the method of the present invention the peel is penetrated so that holes or slices are formed in the peel reaching through the peel until the albedo is reached. Care is taken not to penetrate through the albedo since this will result in too early release of part of the juice resulting in lowering of the yield and deterioration of the quality of the juice.

The penetration may be performed in a barbed drum. Other apparatus for doing this are also available.

When using the barbed drum the deepness of penetration may be adapted by changing the length of the spikes. In this process numerous tiny holes are created across the entire fruit surface and care has to be taken that the peel is perforated so that the albedo can be reached without being penetrated causing the release of the juice, by damaging the fruit segments.

In a next step the perforated fruits are completely immersed in an enzyme solution. Typical enzyme solutions contain pectinases, arabanase, cellulase, beta-glucanase, hemicellulase, xylanase, polygalacturonase. Commercial preparations of these enzymes are available from Novozymes, Rohm and DSM for example Peelzym®.

Through the application of pressure or vacuum the enzyme solution may be forced into the holes so that the enzymes can perform their hydrolysis of the albedo. The enzymes are used under the conditions specified by the supplier. Typically the temperature, pH and time are chosen in such a way that an optimal process is obtained. Typical conditions would include temperature between 10°C and 40°C, pH between 4 and 8, and up to 15 minutes incubation time. Optimisation will depend on pH enzyme activity etc. In a typical industrial process the enzyme solution is at least partially recycled and reused.

Following this step wherein the peel is detached from the fruit segments, the fruit is peeled. This can be done using a disk peeling machine, for example.

The following step is the release of the juice. The remaining citrus fruit is then subjected to pressing or any other method for releasing the juice. The conditions to release the juice are chosen in such a way that the deterioration of the quality and taste which normally occurs in about the first ten minutes of the release of the juice from the vesicles is kept to a minimum. To achieve this, the processing time is kept to a minimum and the temperature is low. Typical process conditions depending on the equipment used would be less the 10 minutes preferably less than 5. Although there is choice to be made from among available equipment good results have been obtained using centrifuge decanters as supplied for example by GEA Westfalia or Flottweg. Decanters separate the product in juice and pomace. The juice stream can be immediately packaged under aseptic conditions by the use of a suitable heat exchanger.

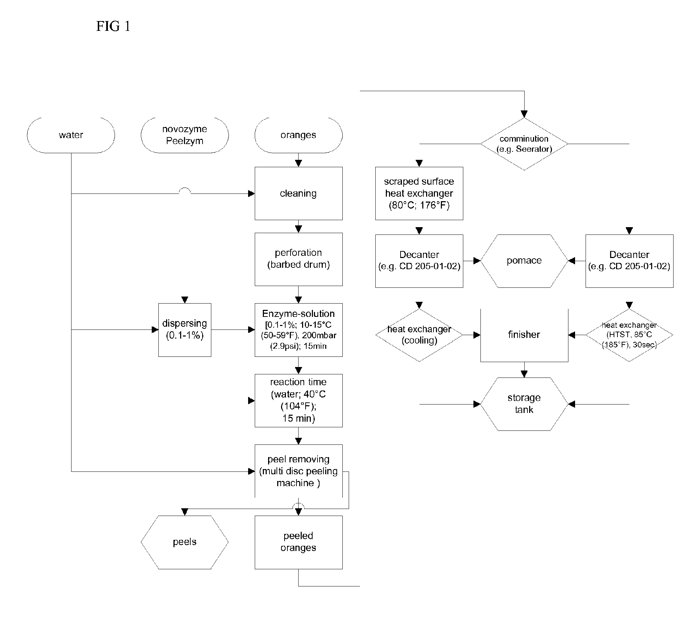

A process diagram can be found in Figure 1.

We have found that the juice prepared by such a process is of high quality and comes close to fresh juice. It compares as follows with existing commercial products.
■ Esters as indicators of fast inactivation of esterases are higher in hand squeezed and peeled juices i.e. more fresh and fruity. Deaeration reduces the esters by insufficient aroma trap before vacuum pump. Juice made from concentrate shows only poor amount of esters. This is process-related and caused by evaporation and later thermal treatment.
■ Terpenes (source: peel as well as pulp) in retail trade juices higher than in hand squeezed and peeled juices. The higher terpene content of orange juices made from peeled oranges compared to hand squeezed juices is caused by remaining peels on fruits (about 2%) from the peeling process and higher mechanical impact.
■ Limonene in trade samples enhanced, except juice from concentrate. Due to the evaporation, during manufacturing process, the content is lower (see also esters).
■ Valencene are compounds found in the peel of citrus which are indicators of extraction of the skin. In commercial products, the valencene content is much higher than hand squeezed samples. The juice according to the present invention provides less valencene content than retail products.
■ Aldehydes from peel and pulp are higher in trade samples than in hand squeezed and peeled juices. Here, as with esters and limonene, the evaporation process of N°9 reduces the content of decanal. Same effect through deaeration (see N°5).

The product is fresh and can be applied in the following applications such as drinks (including sports drinks, health drinks, dairy-based drinks such as smoothies or cereal-based drinks), desserts, breakfast solutions, confectionery products or infant products, for example.

In view of the above the advantages of the process of the present invention can be summarised as follows:
■ the juice contains almost no peel oil (oil bum)
■ processing fresh oranges, results in reduction of bitter substances
■ the juice tastes like hand fresh squeezed
■ processing of the fruits is done at high speed thereby saving natural aroma substances and vitamins
■ fruit grading before processing is not necessary
■ special juice extractors are not needed (e.g. Brown, FMC)
■ juice extractors are usable for processing other fruits and vegetables
   Other advantages of the process of the present invention include;
■ aroma extraction from mesh
■ storage of frozen juice during the phase of non availability of fruits.

The invention will be illustrated by the following non-limiting examples.

### Examples

### Example 1: Method for preparing fresh citrus juice

720 kg/hour of oranges were washed and cleaned and entered into a barbed drum equipped with pins having a length of 3.6 mm. The drum had a diameter of 590 mm and a length of 1000 mm. The drum was rotated continuously.
The perforated oranges were then immersed in an enzyme solution 0.5% (Peelzyme®, Novozyme), at 10-15°C and 200mbar for 15 minutes. The enzyme solution was removed and could be re-used. The oranges were taken-up in water of 40 °C and left to react for 15 minutes.
The peel was removed in a multidisc peeling machine. The peels could be used for oil recovery, and to isolate citrus by-products.
The peeled oranges were comminuted in a Seerator and then brought into a centrifuge decanter (GEA Westfalia, CD 205-01-02). The juice was treated in a heat exchanger (HTST, 85°C, 30s.) and pumped in to a storage tank or packed directly.
The pomace was separated and recovered.

### Example 2. Characterisation of the fresh citrus juice and comparison with commercial packaged juices and fresh pressed juices

The orange juice obtained according to example 1 was tested for its content of specific desirable and undesirable ingredients. A comparison was made with fresh orange juice obtained by hand pressing and different commercially available orange juices. Commercial juices were both 'pure and undiluted' and on the basis of concentrates.

The following analysis have been performed :
- esters, (methylbutanoate and ethylbutanoate),
- terpenes (linalool, α -terpineol, geraniol, terpinen-4-ol, 4-vinylguaiacol, carvone, α -pinene, β-myrcene, α-terpinene),
- limonene,
- aldehyde (decanal),
- valencene.

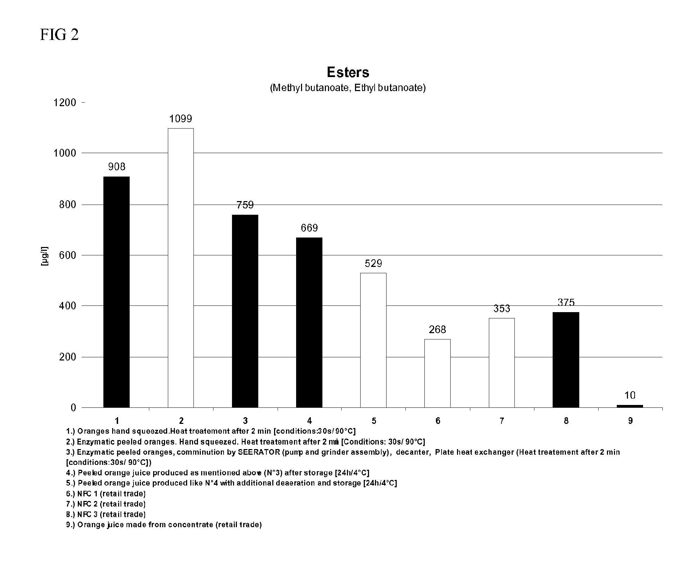

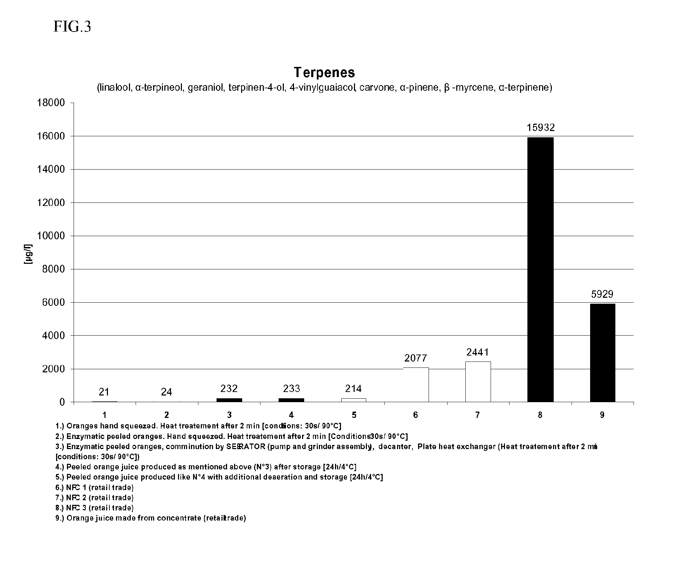

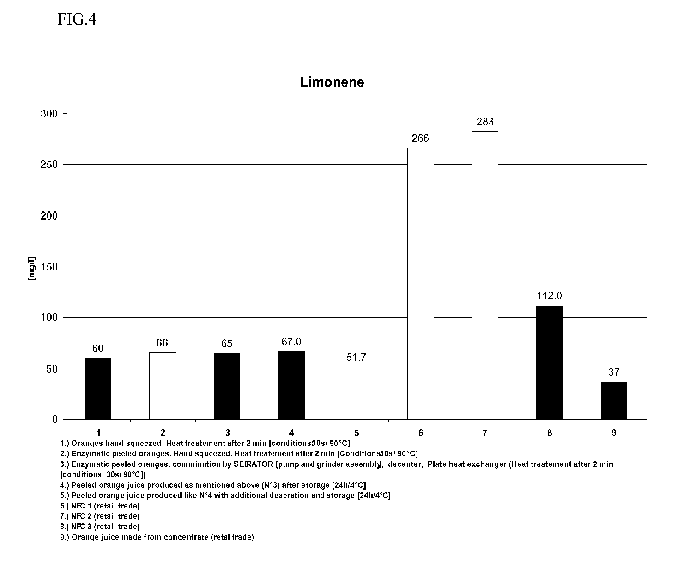

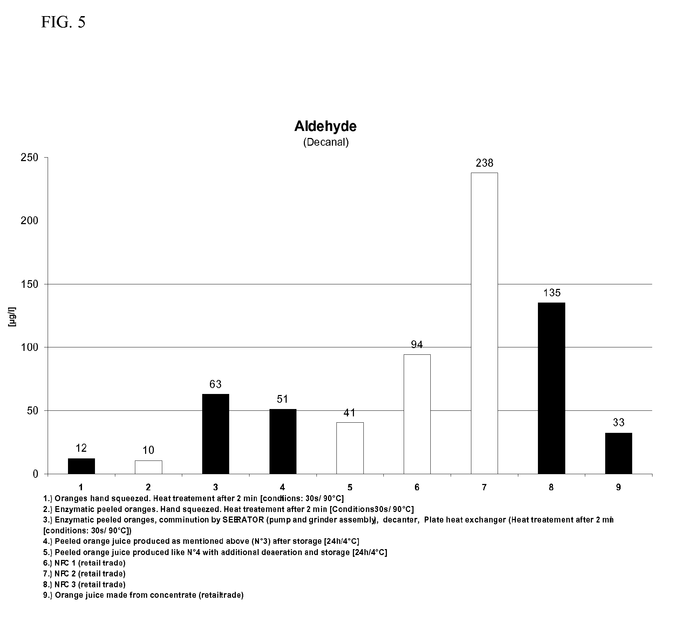

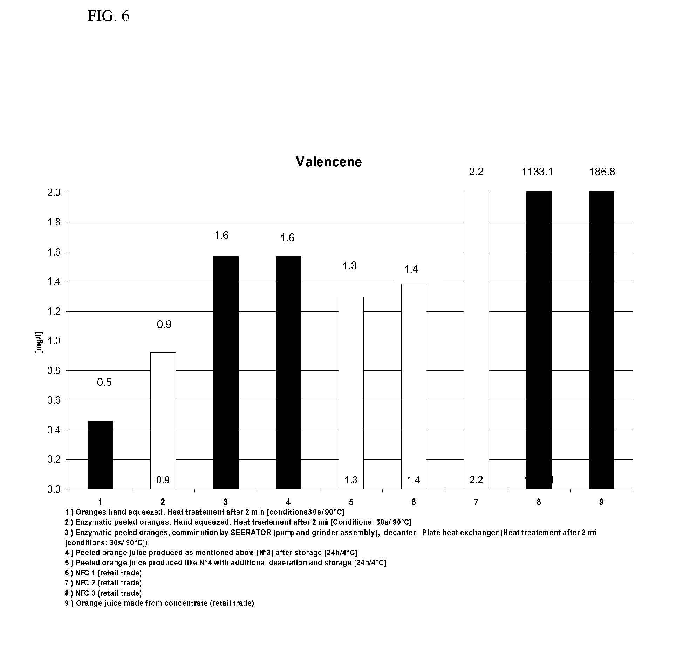

Analysis was preformed by GC/MS after liquid/liquid extraction. Injected samples were 20 µl each. Results are provided in Figure 2-6.

The results of these analysis as can be seen from the figures are as follows.
■ Esters as indicators of fast inactivation of esterases are higher in hand squeezed and peeled juices i.e. more fresh and fruity. Deaeration reduces the esters by insufficient aroma trap before vacuum pump. Juice made from concentrate shows only poor amount of esters. This is process-related and caused by evaporation and later thermal treatement.
■ Terpenes (source: peel as well as pulp) in retail trade juices higher than in hand squeezed and peeled juices. The higher terpene content of orange juices made from peeled oranges compared to hand squeezed juices is caused by remaining peels on fruits (about 2%) from the peeling process and higher mechanical impact.
■ Limonene in trade samples enhanced, except juice from concentrate. Due to the evaporation, during manufacturing process, the content is lower (see also esters).
■ Valencene are compounds found in the peel of citrus which are indicators of extraction of the skin. In commercial products, the valencene content is much higher than hand squeezed samples. The juice according to the present invention provides less valencene content than retail products.
■ Aldehydes from peel and pulp are higher in trade samples than in hand squeezed and peeled juices. Here, as with esters and limonene, the evaporation process of N°9 reduces the content of decanal. Same effect through deaeration (see N°5).

### Example 3. Determination of peel oil in the orange juice

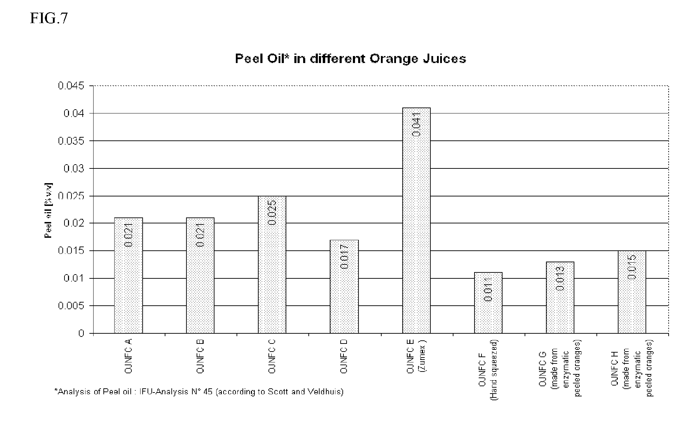

Orange juice obtained according to example 1 was analysed of the presence of peel oil. Analysis of peel oil was performed according to Scott and Veldhuis (IFU-Analysis No 45).
Basically, as shown in figure 7, the amount of peel oil in orange juice prepared according to the present invention is below 0.016 %v/v, preferably below 0.015 %v/v, more preferably below 0.014 %v/v, even more preferably below 0.012 % v/v.

## Claims

1. A stable citrus fruit juice **characterised in that** it contains at least 400 µg/l of esters.

2. Citrus fruit juice **characterised in that** it contains between 400 and 800 µg/l of esters.

3. Citrus fruit juice according to claim 1 or 2 **characterised in that** it contains between 50 and 2000 µg/l terpenes

4. Citrus fruit juice according to claim 1 or 2 wherein the fruit is selected from the group of grapefruit, mandarin and orange or mixtures thereof.

5. Orange juice **characterised in that** it contains between 400 and 800 µg/l of esters (measured in the form of methyl- plus ethyl butanoate), preferably between 500 and 700 µg/l of esters.

6. Orange juice according to claim 5 **characterised in that** it contains between 50 and 2000 µg/l terpenes (linalool, α -terpineol, geraniol, terpinen-4-ol, 4-vinylguaiacol, carvone, α -pinene, β-myrcene, α-terpinene), preferably the between 100 and 1900 µg/l.

7. Orange juice according to claim 5 or 6 **characterised in that** it contains between an amount of peel oil in orange juice prepared according to the present invention is below 0.016 %v/v, preferably below 0.015 %v/v, more preferably below 0.014 %v/v, even more preferably below 0.012 % v/v.

8. A method for preparing a fresh citrus fruit juice comprising the steps of
a) scoring the peel surface of the fruit so as to barely penetrate the albedo or white layer, but not to penetrate the juicy sections,
b) immersing of the treated fruits in an enzymatic solution for a sufficient time to allow the albedo to be enzymatically degraded,
c) peeling the skin of the treated citrus fruit without releasing the juice,
d) releasing the citrus fruit juice under such conditions that it is freshly packaged.

9. A method according to claim 8 wherein the scoring is performed using a barbed drum.

10. The method according to claim 8 wherein the immersing of step b) is performed under reduced pressure.

11. The method of claim 8 wherein the releasing of the citrus juice is performed in a centrifuge decanter.

12. The method according to claim 8 wherein the method is performed at low temperature preferably below 20°C, more preferably below 10°C.

13. The method according to claim 8 **characterised in that** the method is performed with processing time of less than 10 minutes and wherein the juice is immediately packaged.

14. Use of the citrus juice of any one of the claims 1 to 4 in the preparation of drinks (including sports drinks, health drinks, dairy-based drinks such as smoothies, or cereal-based drinks), desserts, breakfast solutions, confectionery products or infant products.
